# EUROPEAN PATENT APPLICATION

(11) **EP 0 782 942 A2**
(43) Date of publication of application: **09.07.1997**
(21) Application number: 96203508.5
(22) Date of filing: 11.12.1996
(51) Int. Cl.: B60R 16/02

(54) **Instrument system**

(30) Priority: 04.01.1996 GB 9600093
(71) Applicant: DELCO ELECTRONICS OVERSEAS CORPORATION, Detroit, Michigan 48202 (US)
(72) Inventor: Dobson, Stephen David, Bebington L63 7QT (GB); Gaskell, Ian Anthony, Newton Le Willows WA12 9RG (GB)
(74) Representative: Denton, Michael John

(57) **Abstract**

An instrument system (10) comprising a central processing unit (12) capable of receiving a signal (36) from at least one sensor (38); and at least one gauge assembly (14) connected with the central processing unit; the or each gauge assembly including a gauge, and gauge coding means providing a signal to the central processing unit dependent on the type of gauge in the gauge assembly; the central processing unit sending a signal to operate the gauge dependent on the signal from the or each sensor and the signal from the gauge coding means. Allows interchangeability of gauges in an instrument facia.

## Description

The present invention relates to an instrument system for use, in particular, in a motor vehicle.

US-A-4875041 describes an instrument system in which the gauges have a fixed position after assembly of the system. The system includes a selection logic circuit which monitors the input signal and decides which gauge is to received that signal. After initial assembly of the system, the gauges cannot be moved without re-wiring of the system. US-A-4507706 describes an instrument system in which the gauges are positioned in the required places, and then wired into place. Again, after initial assembly of the system, the gauges cannot be moved without re-wiring of the system.

It is an object of the present invention to provide an improvement to the above known systems.

An instrument system in accordance with the present invention comprises a central processing unit capable of receiving a signal from at least one sensor; and at least one gauge assembly connected with the central processing unit; the or each gauge assembly including a gauge, and gauge coding means providing a signal to the central processing unit dependent on the type of gauge in the gauge assembly; the central processing unit sending a signal to operate the gauge dependent on the signal from the or each sensor and the signal from the gauge coding means.

The present invention allows the relative positions of the gauges to be changed even after initial assembly of the instrument system.

The present invention will now be described, by way of example, with reference to the accompanying drawings, in which:-
Figure 1 is a schematic representation of an instrument system in accordance with the present invention;
Figure 2 is a schematic representation of the gauge assembly and circuitry for the instrument system of Figure 1; and
Figure 3 is a table of gauge codes for the instrument system of Figure 1.

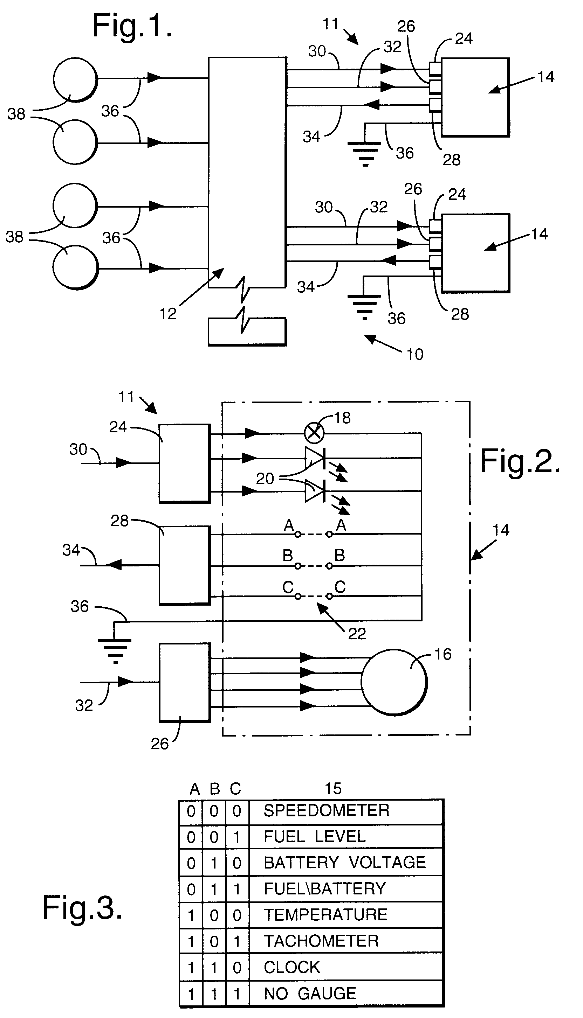

Referring to Figures 1 and 2 of the drawings, the instrument system 10 comprises a central processing unit (CPU) 12 and a number of gauge assemblies 14. Each gauge assembly 14 comprises a gauge 16, gauge code means 22, and, optionally, illumination in the form of a light bulb 18 for illuminating the gauge, and a pair of light emitting diodes (LED's) 20 for providing warning lights. Associated with the CPU 12 is circuitry 11 for operating the components of the gauge assembly 14. The circuitry 11 includes an illumination and warning lights circuit 24 which is connected to the light bulb 18 and LED's 20; a drive circuit 26 which is connected to the gauge 16; and a coding circuit 28 which is connected to the gauge code means 22. The circuitry 11 is preferably integrally formed with or within the CPU 12.

The components of each gauge assembly 14 are preferably mounted within a gauge housing (not shown) and each assembly preferably has eleven connecting pins extending from the housing, three pins for connection with the illumination and warning lights circuit 24, four pins for connection with the drive circuit 26, three pins for connection with the coding circuit 28, and one pin for connection with electrical ground by way of line 36.

The illumination and warning lights circuit 24 and the associated light bulb 18 and LED's 20, and the drive circuit 26 and associated gauge 16 can be any conventional known arrangement, and will not be described in detail.

The gauge code means 22 preferably comprises a sequence of resistive links effectively connected in parallel across terminals A, B, and C. The sequence is determined from the table shown in Figure 3 and each sequence defines the type of gauge 16 that is present in that particular gauge assembly 14. For example, if the sequence is A=0, B=0, C=0, then the gauge 16 in that gauge assembly 14 is a speedometer. Similarly, if the sequence is A=1, B=0, and C=0, then the gauge 16 in that gauge assembly 14 is an engine temperature gauge. Each sequence of resistors and the associated gauge is predetermined dependent on the requirements for the instrument system 10. The coding circuit 28 monitors the coding means 22 and provides a signal on line 34 which indicates the type of gauge 16 that is present in that gauge assembly 14. The coding circuit 28 may be a parallel to serial converter or a buffer circuit.

The CPU 12 is preferably a microprocessor which receives signals from various sensors 38 on input lines 36. The microprocessor interprets the signals on lines 36, and also interrogates the signals from the coding circuits 28 on line 34. With this information available, the microprocessor can establish which gauge type is fitted within each gauge assembly 14 and can direct an appropriate signal to the drive circuit 26 of the relevant gauge assembly 14 by way of line 32. The microprocessor may also send a signal to the illumination and warning lights circuit 24 via line 30 to illuminate the bulb 18 and/or the LED's 20 if appropriate. For example, if the CPU 12 receives a signal from a fuel level sensor, the microprocessor can scan the coding signals at lines 34 to determine which gauge assembly 14 is fitted with a fuel level gauge, and then send the appropriate signal to that gauge to provide a reading on the gauge which will indicate fuel level.

It will be appreciated that with the instrument system 10 of the present invention, the relative positions of the gauges 16 is immaterial because the CPU 12 determines from the coding means 22 which gauge is present in each gauge assembly 14. The relative positions of the gauge assemblies 14 can, therefore, easily be changed, and the gauge assemblies can be moved around even after initial assembly of the instrument system 10. This arrangement can be made easier by the presence of a suitable electrical connector (not shown) connected to the circuitry 11 of the CPU 12 and capable of receiving the pins of the gauge assemblies 14. In this case, the connector would have electrical sockets for receiving the pins. As an alternative, the electrical connector may have connecting pins and the gauge assemblies may have electrical sockets rather than pins.

Variations could be made to the above described embodiment. For example, the gauge code means could comprise more or less than three resistive links to provide a sequence of codes for the gauge type, and the gauge type may be different from the sequence shown in Figure 3. Further, a coding system may be provided by resistive links connected in an alternative manner to the parallel connection described above, or by means other than resistive links. Still further, the microprocessor may be replaced by an electronic circuit.

In a motor vehicle, the present invention provides for the interchangeability of gauges within an instrument facia, and the vehicle operator can easily insert new gauges in the facia and/or swap the positions of existing gauges within the facia to meet the driver's requirements. The present invention also lends itself to the use of dual or multi function gauges, for example a fuel consumption/battery voltage gauge of a hybrid vehicle.

## Claims

1. An instrument system (10) comprising a central processing unit (12) capable of receiving a signal (36) from at least one sensor (38); and at least one gauge assembly (14) connected with the central processing unit; the or each gauge assembly including a gauge (16), and gauge coding means (22) providing a signal to the central processing unit dependent on the type of gauge in the gauge assembly; the central processing unit sending a signal to operate the gauge dependent on the signal from the or each sensor and the signal from the gauge coding means.

2. An instrument system as claimed in Claim 1, wherein the central processing unit is a microprocessor (12).

3. An instrument system as claimed in Claim 1 or Claim 2, wherein the gauge coding means (22) comprises a predetermined sequence of resistive links.

4. An instrument system as claimed in any one of Claims 1 to 3, wherein the gauge assembly (14) further includes at least one warning light (20) which is illuminated on receiving a signal from the central processing unit.

5. An instrument system as claimed in any one of Claims 1 to 4, wherein the gauge assembly (14) further includes a light bulb (18) which is illuminated on receiving a signal from the central processing unit to illuminate the gauge.

6. An instrument system as claimed in any one of Claims 1 to 5, wherein the gauge assembly (14) is mounted within a housing which has electrical connecting pins extending therefrom, the pins being connected with the central processing unit (12) and providing an electrical connection from the gauge coding means (22) to the central processing unit and for providing an electrical connection from the central processing unit to the gauge (16).

7. An instrument system as claimed in Claim 6, wherein an electrical connector is connected to the central processing unit (12) and has electrical connecting sockets for receiving the connecting pins.
